# EUROPEAN PATENT SPECIFICATION

(11) **EP 0 424 523 B1**
(45) Date of publication and mention of the grant of the patent: **24.07.1996**
(21) Application number: 90908804.9
(22) Date of filing: 10.05.1990
(51) Int. Cl.: C08L 1/08, C09K 17/00, A01G 13/02

(54) **SPRAYABLE COMPOSITION**
SPRÜHBARE ZUSAMMENSETZUNG
COMPOSITION PULVERISABLE

(30) Priority: 10.05.1989 US 350599
(43) Date of publication of application: 02.05.1991
(73) Proprietor: NEWASTECON, INC., Toledo, OH 43604 (US)
(72) Inventor: NACHTMAN, Thomas, Temperance, MI 48182 (US); HULL, John, Toledo, OH 43606 (US); O'SHEA, Patrick, Troy, MI 48908 (US)
(74) Representative: Darby, David Thomas
(86) International application number: US9002691
(87) International publication number: WO9013598

(56) References cited:
- EP-A- 0 033 997
- EP-A- 0 052 686
- DE-A- 2 851 701
- US-A- 2 802 303
- US-A- 3 772 893
- US-A- 3 895 956
- US-A- 3 986 365
- US-A- 4 232 480
- US-A- 4 297 810
- US-A- 4 369 597
- US-A- 4 414 776
- US-A- 4 787 928
- WPI, FILE SUPPLIER, accession no. 77-31882Y [18], Derwent Publications Ltd, London, GB; & JP-B-58 042 166

## Description

### BACKGROUND OF THE INVENTION

The present invention relates to a sprayable composition comprising a water-soluble polymer and clay, and to a method of spraying the composition for covering a material to be protected such as soil, refuse at a disposal site, or other material in a stockpile to form a protective water-resistant layer thereover.

U.S. Patent No. 3,763,072 to Krieger discloses a composition comprising an aqueous acrylic latex emulsion and sodium silicate for forming a crust on soil.

U.S. Patent No. 2,961,799 discloses a composition comprising a spray latex (styrene/butadiene) and clays for protecting soil from erosion.

US Patent No. 2,802,303 relates to a method of minimizing soil erosion wherein the soil is coated with an aqueous slurry comprising clay, which may be bentonite; water-soluble cellulose which may be sodium carboxy methyl hydroxyethyl cellulose; and, optionally, fibrous material, which may be paper pulp.

European Patent No. 52,686 describes an insulative aqueous composition comprising kaolin; fibres, which may be waste paper; a dispersing agent, which may be a non-ionic surfactant; and, optionally, a cellulosic thickener, which may be hydroxyethyl cellulose. The composition is applied to structural materials for the provision of insulating properties.

There is a need for a sprayable composition to form a protective, water-resistant layer over material, and a method of using the composition to cover, for example, the upper layer of refuse at a disposal site, the composition preferably having the following advantages:
1) easily sprayed at ambient temperature;
2) does not mist in the air when sprayed;
3) tacks down dust or papers that are blown unwantedly by wind;
4) becomes water-resistant when cured and set up after spraying;
5) resists cracking even in hot temperature including temperatures above 38°C (100°F) ;
6) after setting up, the sprayed layer has decreased surface penetration by precipitation;
7) daily cover layers biodegrade and break up to permit leachate collection;
8) reduces volatile emissions and controls odor.

### SUMMARY OF THE INVENTION

The present invention provides a sprayable composition for forming a cover layer over a material, the composition comprising:
(a) A water-soluble cellulosic polymer that, after spraying, becomes water resistant;
(b) clay;
(c) fibrous material;
(d) gypsum; and
(e) a carrier for the polymer, the clay, the fibrous material and the gypsum;
the composition, after spraying, becoming water-resistant, tough and flexible.

The material to be protected may be, for example, (1) soil, (2) refuse at a disposal site, a sanitary landfill, or hazardous material landfill, or (3) a stockpile of material such as grain, salt or coal. When used over soil, the composition can function as both a means of providing erosion control and/or a means for distributing seed and fertilizer over the soil.

The present invention also provides a process of forming a cover layer over a material, the process comprising the steps of:
(A) mixing protective layer forming ingredients to form a composition comprising
   (a) a water soluble cellulosic polymer;
   (b) clay;
   (c) fibrous material;
   (d) gypsum; and
   (e) a carrier for the polymer, clay, fibrous material and gypsum;
(B) spraying the composition over the selected material to form a layer;
(C) protecting the material by allowing the layer to set up and form a water-resistant, tough and flexible layer.

The present invention further provides a process of forming a protective cover over a disposal site or material stockpile comprising the steps of:
(a) spraying onto the disposal side or stockpile a composition comprising a water-soluble cellulosic polymer, clay, fibrous material, gypsum and a carrier to form a layer over the disposal site or stockpile, and
(b) protecting the disposal site or stockpile by causing or allowing the sprayed composition to set up and form a water-resistant, tough and flexible layer thereon.

Fibrous material is used in the composition to provide mass and toughness, a preferred fibrous material being paper and/or wood.

Other materials are advantageously added to the composition such as one or more of the following additives: a surfactant, a glue, an anti-foam agent, borax, a dye, and an odor control agent.

It is therefore an object of the present invention to provide a sprayable composition as described above, and an easily used, economical method of protecting a material by spraying the composition over the material to form a water-resistant, tough and flexible cover layer.

Other objects of the present invention will be apparent to one skilled in the art from reading the following description of the preferred embodiment.

### DETAILED DESCRIPTION OF THE INVENTION

The following sprayable compositions have been found to be useful to provide the new and outstanding cover layer:

| Ingredients | Parts by Weight |
|---|---|
| (a) Cellulosic Polymer | 5 to 50 |
| (b) Bentonite | 25 to 200 |
| (c) Paper | 10 to 100 |
| (d) Surfactant | 5 to 50 |
| (e) Glue | 5 to 25 |
| (f) Gypsum | 5 to 100 |
| (g) Water | 2000 to 8000 |

The preferred composition contains the following ingredients in parts by weight:

| Ingredients | Parts by Weight |
|---|---|
| Cellulosic Polymer | 15-25 |
| Bentonite | 80-120 |
| Shredded Paper | 25-75 |
| Water | 4500-6000 |

A very successful composition has been found to have the following ingredients in parts by weight:

| Ingredients | Parts by Weight |
|---|---|
| Cellulosic Polymer | 20 |
| Bentonite | 100 |
| Shredded Paper | 50 |
| Water | 4800-5800 |

In general, very useful cover layers have been formed from a composition comprising:
(a) a nonionic water soluble polymer of cellulose that is a hydroxyethyl ether of cellulose having a viscosity of 100 to 5000 (Brookfield - #3 spindle);
(b) bentonite;
(c) shredded paper;
(d) a nonionic surfactant that is an ethoxylated nonylphenol;
(e) a glue;
(f) gypsum, and
(g) water

In the present invention, the water-soluble cellulosic polymer is preferably a hydroxyethylether of cellulose having a viscosity of 100 to 5,000, advantageously 500 to 2,000 (Brookfield-#3 spindle).

Water-soluble cellulosic polymers are known in the art and available commercially, such as Cellobrand TM HEC water-soluble hydroxyethyl cellulose (trademark of the British Pilsylin Company - BP Chemicals, Ltd.) as set forth in their bulletin, Sept. 1982, 3625 162 7000, entitled Cellobond HEC hydroxyethyl cellulose, water-soluble polymer. Another very useful cellulosic polymer is Natrosol TM hydroxyethyl cellulose (a trademark of Hercules Incorporated) as set forth, for instance, in their brochure dated 1980 entitled "Natrosol TM Hydroxyethyl Cellulose, a Nonionic Water-Soluble Polymer".

A preferred polymer is Natrosol HHR-250 (Hercules) as are other Natrosol 250 polymers as well as Natrosol 150 and 300 polymers. Natrosol is produced in four levels of hydroxyethyl molar substitutes; 1.5, 1.8, 2.5 and 3.0, the polymers being designated 150, 180, 250 and 300, respectively.

As known in the art, clay comprises a group of crystalline, finely divided earthy materials generally considered to be hydrates of alumina and silica, with iron oxide and magnesia as common minor components. Bentonite clay is preferred, although kaolin, attapulgite and montmorillonite can be used. Suitable clays are set forth in an IMV bulletin entitled MVITONE TM organoclays and clay products, Bentonite-Hectorite-Saponite-Sepcolite. IMV is a division of Gulf Resources and Chenuet Corp. A suitable bentonite clay is sold by NL Bariod Supplies in a suitable mesh size of 200 mesh (60 to 325 mesh particles of a clay generally being very useful).

As previously indicated, shredded paper is a preferred fibrous material. U.S. Patent No. 3,812,615 discloses fibrous material for use in a foam for coating soil with a mulch. The foamed material is made from an acrylic polymer, a polyepoxide, a wetting agent, a thickening material, water, and, of course, the fibrous material such as cellulose fibers, including wood pulps and other fiber sources such as old newspapers and cotton linters.

The fibrous material of the present invention includes such above-described fibers and also glass fibers, fibers from rice paper, straw and textile fibers. The fibers are preferably short in length and thin in diameter, about 3.18 mm (1/8 inch) in diameter and 6.35 mm (1/4 inch) in length being about the maximum size for a sprayable composition. Preferably, as with shredded paper, the fibers are much shorter and thinner. As described in U.S. Patent No. 3,812,615, the fiber length is preferably less than about 12.7 mm (1/2 inch) and the average diameter less than about 6.35 mm (1/4 inch).

In addition, a glue such as guar gum glue can be used to increase the adhesion properties of the composition. As an alternative to guar gum glue, it has been found that a cellulosic polymer (in addition to the cellulosic polymer such as Natrosol described above) can be used to increase the adhesion properties of the composition. One such polymer is available from the Agualon Company of Wilmington, Delaware under the tradename Culminal MC.

Gypsum is used to help provide stiffness and act as a hardener for faster setting up or curing. The specific amount of gypsum which can be used may vary, but is generally at least 0.5% by weight and may be up to 10 - 15% by weight.

An effective composition which utilizes Culminal polymer contains the following ingredients in per cent by weight:

| Ingredients | Per Cent by Weight |
|---|---|
| Natrosol polymer | 0.2 - 1.2% |
| Culminal polymer | 0.1 - 0.6% |
| Gypsum | 0.5 - 15.0% |
| Bentonite | 2.0 - 6.0% |
| Cellulose/wood fiber | 2.0 - 4.0% |
| Water | 80 - 95% |

Generally, in the above-noted composition, the amount of Natrosol polymer used will be approximately twice the amount of the Culminal polymer. Also, the amount of carrier or water used will be typically dictated by the desired spraying viscosity of the composition.

Although generally not as important as the preceding materials (especially the polymer, the clay, the carrier, the fibrous material, the gypsum and, optionally, the adhesion agent), a surfactant, an anti-foam agent, borax, a dye, and an odor control agent can be used. A preferable odor control agent is sold under the tradename CleanSense and is described in allowed U.S. Patent No. 4 816 220. In addition, materials such as fly ash, foundry sand, kiln dust, and bag house dust can be used to replace some of the fibrous material (preferably only up to 50% by weight thereof) or even some of the clay (but preferably only 5 to 20 wt. % thereof, and usually no more than 30 to 50 wt. % thereof).

Useful surfactants include biodegradable surfactants such as non-ionic materials such as ethoxylated nonyl phenol (6 mole adduct) which is water and oil soluble and therefore very easily used with the preferred carrier, water or even the carrier solvents such as oil, alcohols, methyl ethyl ketone and acetone. A suitable nonionic surfactant is N-60 (Texaco Chemical Co.).

In general, the optional materials can be used at about the same rate as the cellulosic polymer.

The carrier may comprise an aqueous leachate from a disposal site. It is believed that recycling the leachate into the site will enhance the natural bacterial action which acts to reduce the volume of the organic refuse, while also eliminating the need to transport leachate to a treatment plant.

A preferred composition has been found to include the following ingredients:

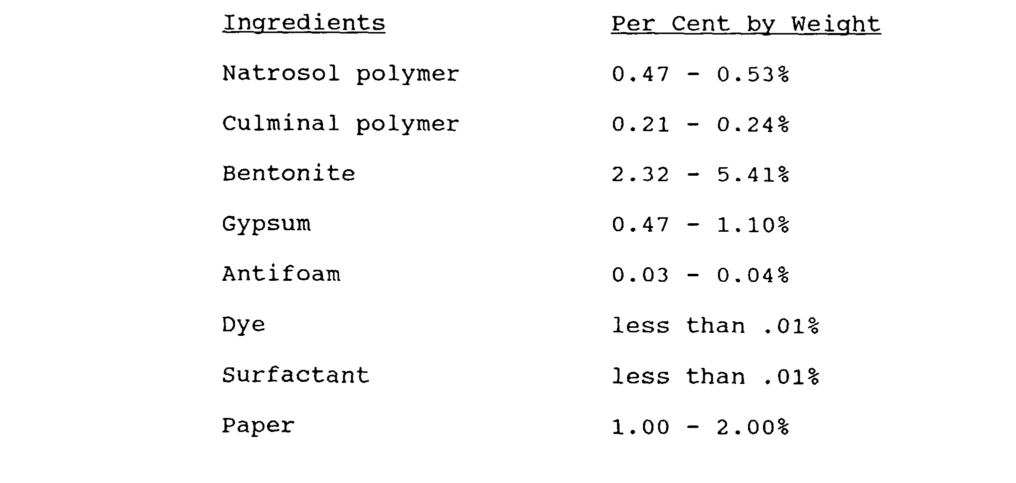

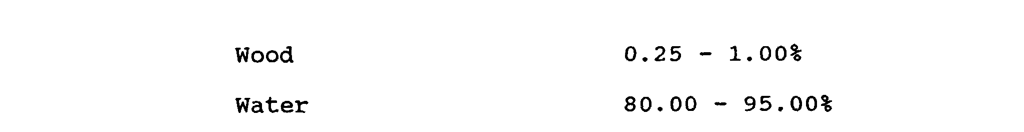

Generally, the amount of cellulosic fiber (paper and wood) may vary up to 50%. Also the wood and paper blend may vary. In the example immediately above, the cellulosic fiber materials include approximately 30% wood and 70% paper. However, this may vary up to 70% wood and 30% paper. The cellulosic fiber material may also have cardboard added and include for example, 20% cardboard, 40% wood, and 40% paper.

In addition, if the composition is used as a means of distributing seeds and/or fertilizer over soil, the composition will typically include from 5 - 30% by weight of seed, and approximately 10% by weight of fertilizer.

The cover layer of the invention usually, after spraying, has a thickness of about 1.59 or 3.18 mm (1/16 or 1/8 inch) up to 50.8 to 76.2 mm (2 to 3 inches), although generally about 6.35 to 25.4 mm (1/4 to 1 inch) is preferred.

## Claims

1. A sprayable composition for forming a cover layer over a material, the composition comprising:
(a) A water-soluble cellulosic polymer that, after spraying, becomes water resistant;
(b) clay;
(c) fibrous material;
(d) gypsum; and
(e) a carrier for the polymer, the clay, the fibrous material and the gypsum;
the composition, after spraying, becoming water-resistant, tough and flexible.

2. A composition as defined in claim 1, which further comprises a surfactant.

3. A composition as defined in claim 2, wherein the surfactant is a nonionic surfactant that is an ethoxylated nonylphenol.

4. A composition as defined in any one of claims 1 to 3, which further comprises a glue.

5. A composition as defined in any one of claims 1 to 4, which further comprises borax.

6. A composition as defined in any one of claims 1 to 5, which further comprises a dye.

7. A composition as defined in any one of claims 1 to 6, which further comprises an odor control agent.

8. A composition as defined in any one of claims 1 to 7, which further comprises an anti-foam agent.

9. A composition as defined in any one of claims 1 to 8, wherein the fibrous material comprises paper.

10. A composition as defined in any one of claims 1 to 9, wherein the fibrous material comprises wood.

11. A composition as defined in any one of claims 1 to 10, wherein the clay is bentonite.

12. A composition as defined in any one of claims 1 to 11, in which the cellulosic polymer is a hydroxyethyl ether of cellulose having a viscosity of 100 to 5000 (Brookfield - #3 spindle).

13. A composition as defined in any one of claims 1 to 12, wherein the carrier comprises an aqueous leachate from a disposal site.

14. A composition as defined in any one of claims 1 to 13, wherein the material is soil.

15. A composition as defined in claim 1 in which the ingredients are present in the following proportions by weight:
| | |
|---|---|
| (a) Cellulosic Polymer | 1 to 10 |
| (b) Bentonite | 5 to 40 |
| (c) Paper | 2 to 20 |
| (d) Surfactant | 1 to 10 |
| (e) Gypsum | 1 to 20 |
| (f) Water | 400 to 1600 |

16. A process of forming a protective cover over a disposal site or material stockpile comprising the steps of:
(a) spraying onto the disposal side or stockpile a composition comprising a water-soluble cellulosic polymer, clay, fibrous material, gypsum and a carrier to form a layer over the disposal site or stockpile, and
(b) protecting the disposal site or stockpile by causing or allowing the sprayed composition to set up and form a water-resistant, tough and flexible layer thereon.

17. A process as defined in claim 16, wherein the composition comprises a water-soluble cellulosic polymer, fibrous material, clay, gypsum and water, the proportions thereof being in the following ranges:
| Ingredients | Parts by Weight |
|---|---|
| (a) Cellulosic Polymer | 1 to 10 |
| (b) Bentonite | 5 to 40 |
| (c) Paper | 2 to 20 |
| (d) Surfactant | 1 to 10 |
| (e) Gypsum | 1 to 20 |
| (f) Water | 400 to 1600 |

## Patentansprüche

1. Sprühfähige Zusammensetzung zur Bildung einer Deckschicht über einem Material, wobei die Zusammensetzung umfaßt
(a) ein wasserlösliches cellulosisches Polymer, das nach dem Sprühen wasserresistent wird;
(b) Lehm;
(c) faseriges Material;
(d) Gips und
(e) einen Träger für das Polymer, den Lehm, das faserige Material und den Gips,
wobei die Zusammensetzung nach dem Sprühen wasserresistent, zäh und flexibel wird.

2. Zusammensetzung nach Anspruch 1,
die weiterhin ein oberflächenaktives Mittel umfaßt.

3. Zusammensetzung nach Anspruch 2,
worin das oberflächenaktive Mittel ein nicht-ionisches oberflächenaktives Mittel ist, das ein ethoxyliertes Nonylphenol ist.

4. Zusammensetzung nach einem der Ansprüche 1 bis 3, die weiterhin einen Leim enthält.

5. Zusammensetzung nach einem der Ansprüche 1 bis 4, die weiterhin Borax enthält.

6. Zusammensetzung nach einem der Ansprüche 1 bis 5, die weiterhin einen Farbstoff enthält.

7. Zusammensetzung nach einem der Ansprüche 1 bis 6, die weiterhin ein Geruchssteuerungsmittel enthält.

8. Zusammensetzung nach einem der Ansprüche 1 bis 7, die weiterhin ein Antischaummittel enthält.

9. Zusammensetzung nach einem der Ansprüche 1 bis 8, worin das faserige Material Papier umfaßt.

10. Zusammensetzung nach einem der Ansprüche 1 bis 9, worin das faserige Material Holz umfaßt.

11. Zusammensetzung nach einem der Ansprüche 1 bis 10, worin der Lehm Bentonit ist.

12. Zusammensetzung nach einem der Ansprüche 1 bis 11, worin das cellulosische Polymer ein Hydroxyethylether von Cellulose mit einer Viskosität von 100 bis 5000 (Brookfield - #3 Spindel) ist.

13. Zusammensetzung nach einem der Ansprüche 1 bis 12, worin der Träger ein wässriges Auslaugmaterial von einer Beseitigungsstelle umfaßt.

14. Zusammensetzung nach einem der Ansprüche 1 bis 13, worin das Material Erde ist.

15. Zusammensetzung nach Anspruch 1,
worin die Bestandteile in den folgenden Gewichtsanteilen vorhanden sind:

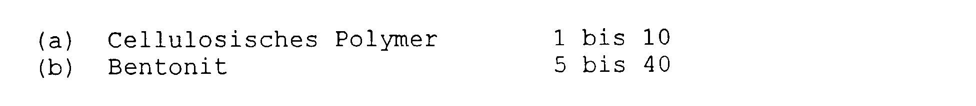

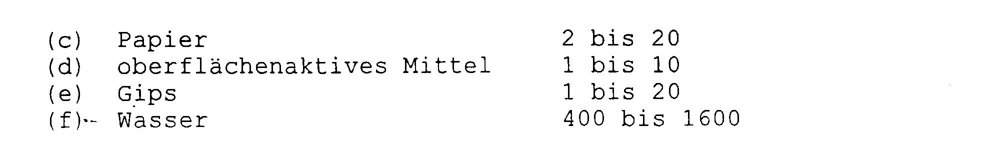

16. Verfahren zur Bildung einer Schutzschicht über einer Beseitigungsstelle oder einer Materialhalde, umfassend die Schritte:
(a) Sprühen einer Zusammensetzung, umfassend ein wasserlösliches, cellulosisches Polymer, Lehm, faseriges Material, Gips und einen Träger, auf die Beseitigungsstelle oder Halde, zur Bildung einer Schicht über der Beseitigungsstelle oder Halde, und
(b) Schützen der Beseitigungsstelle oder Halde durch Verursachung oder Ermöglichung des Absetzens der gesprühten Zusammensetzung und der Bildung einer wasserresistenten, zähen und flexiblen Schicht darauf.

17. Verfahren nach Anspruch 16,
worin die Zusammensetzung ein wasserlösliches, cellulosisches Polymer, faseriges Material, Lehm, Gips und Wasser enthält, wobei die Anteile davon in den folgenden Bereichen liegen:
| BESTANDTEILE | GEWICHTSTEILE |
|---|---|
| (a) Cellulosisches Polymer | 1 bis 10 |
| (b) Bentonit | 5 bis 40 |
| (c) Papier | 2 bis 20 |
| (d) oberflächenaktives Mittel | 1 bis 10 |
| (e) Gips | 1 bis 20 |
| (f) Wasser | 400 bis 1600 |

## Revendications

1. Composition pulvérisable pour former une couche de revêtement sur un matériau, la composition comprenant:
(a) un polymère cellulosique hydrosoluble qui, après pulvérisation, devient résistant à l'eau;
(b) de l'argile;
(c) une matière fibreuse;
(d) du gypse; et
(e) un support pour le polymère, l'argile, la matière fibreuse et le gypse;
la composition, après pulvérisation, devenant résistante à l'eau, tenace et flexible.

2. Composition selon la revendication 1, qui comprend, en outre, un corps tensio-actif;

3. Composition selon la revendication 2, dans laquelle le corps tensio-actif est un corps tensio-actif non-ionique qui est un nonylphénol éthoxylé.

4. Composition selon l'une quelconque des revendications 1 à 3, qui comprend, en outre, une colle.

5. Composition selon l'une quelconque des revendications 1 à 4, qui comprend, en outre ,du borax.

6. Composition selon l'une quelconque des revendications 1 à 5, qui comprend, en outre, un colorant.

7. Composition selon l'une quelconque des revendications 1 à 6, qui comprend, en outre, un agent agissant sur les odeurs.

8. Composition selon l'une quelconque des revendications 1 à 7, qui comprend, en outre, un agent antimousse.

9. Composition selon l'une quelconque des revendications 1 à 8, dans laquelle la matière fibreuse comprend le papier.

10. Composition selon l'une quelconque des revendications 1 à 9, dans laquelle la matière fibreuse comprend le bois.

11. Composition selon l'une quelconque des revendications 1 à 10, dans laquelle l'argile est de la bentonite.

12. Composition selon l'une quelconque des revendications 1 à 11, dans laquelle le polymère cellulosique est un hydroxyéthyl éther de cellulose ayant une viscosité de 100 à 5000 (Brookfield - Mobile n°3).

13. Composition selon l'une quelconque des revendications 1 à 12, dans laquelle le support comprend un produit de lixiviation aqueux provenant d'un site de décharge de déchets.

14. Composition selon l'une quelconque des revendications 1 à 13, dans laquelle la matière est de la terre.

15. Composition selon la revendication 1, dans laquelle les ingrédients sont présents selon les proportions suivantes exprimées en poids:
| | |
|---|---|
| (a) Polymère cellulosique | 1 à 10 |
| (b) Bentonite | 5 à 40 |
| (c) Papier | 2 à 20 |
| (d) Tensio-actif | 1 à 10 |
| (e) Gypse | 1 à 20 |
| (f) Eau | 400 à 1600 |

16. Procédé de formation d'un revêtement protecteur sur un site de décharge de déchets ou un tas de matériaux, comprenant les étapes consistant:
(a) à pulvériser sur le site de décharge de déchets ou le tas de matériau une composition comprenant un polymère cellulosique hydrosoluble, de l'argile, une matière fibreuse, du gypse et un support de manière à former une couche sur le site de décharge de déchets ou le tas de matériaux, et
(b) à protéger le site de décharge de déchets ou le tas de matériaux en faisant ou laissant durcir la composition pulvérisée de manière qu'elle forme un couche résistante à l'eau, tenace et souple sur le site de décharge de déchets ou le tas de matériaux.

17. Procédé selon la revendication 16, dans lequel la composition comprend un polymère cellulosique hydrosoluble, une matière fibreuse, de l'argile, du gypse et de l'eau, les proportions de ces produits étant comprises dans les plages suivantes:
